# EUROPEAN PATENT APPLICATION

(11) **EP 4 745 651 A1**
(43) Date of publication of application: **20.05.2026**
(21) Application number: 25209945.2
(22) Date of filing: 21.10.2025
(51) Int. Cl.: G02B 27/01

(54) **MULTISCOPY USING COLLIMATED BACKLIGHT AND DYNAMIC BEAM STEERING**

(30) Priority: 13.11.2024 US 202418946193
(71) Applicant: Distance Technologies Oy, 00530 Helsinki (FI)
(72) Inventor: Strandborg, Mikko, 00530 Helsinki (FI); Konttori, Urho, 00530 Helsinki (FI)
(74) Representative: Moosedog Oy

(57) **Abstract**

A liquid crystal display (LCD) device (104) comprises a backlight unit (110) configured to produce collimated light (112). A relative location of a head (116) or eyes (118a-118b) of at least one user with respect to an image plane of the LCD device is determined. A plurality of images are displayed via the LCD device, to sequentially produce sets of collimated light beams. An active optical element (106), arranged on an optical path of the LCD device, is controlled based on a relative location of a head or a given eye (118a) of an individual one of the at least one user with respect to the image plane of the LCD device, to direct a respective one of the sets of collimated light beams towards the head or the given eye of the individual one of the at least one user.

## Description

### TECHNICAL FIELD

The present disclosure relates to systems for facilitating multiscopy by employing collimated backlights and dynamic beam steering. The present disclosure also relates to methods for facilitating multiscopy by employing collimated backlights and dynamic beam steering.

### BACKGROUND

Heads-up displays (HUDs) that project images on vehicle windshields or other windows need to work in various lighting conditions, for example, ranging from direct sunlight to dimly-lit night conditions. An especially challenging situation is when an outdoor lighting condition is very bright (for example, when an average intensity of ambient light lies in a range of 10000 lux to 25000 lux). In such challenging situations, a conventional liquid crystal display (LCD) based HUD may not be capable of achieving brightness levels that can produce a legible image. This problem is exacerbated when an area on which images are projected is relatively large (for example, when a field of view of said area lies in a range of 20 degrees x 20 degrees to 60 degrees x 25 degrees, or even more). This is because in such situations, a limited number of photo-emitting cells in the LCD based HUD are utilised to display the images on a relatively larger area, which means that light produced by a single pixel has to cover a relatively larger pixel area, thereby reducing an overall brightness of the displayed images.

To add to this, in case of 3D HUDs, where a light field display unit comprises a multiscopic optical element (for example, such as a parallax barrier, a lenticular array, an array of liquid crystal lenses, or similar) for producing an autostereoscopic effect, the overall brightness of displayed images is further reduced. This overall brightness is even further reduced in cases where there are multiple users. Combined with the challenges of a conventional LCD based HUD, such multiscopic optical elements may not allow to achieve sufficient brightness levels that can produce legible images. This may be even more problematic when a dark visual scene is required to be presented.

It is well known that low brightness levels can make it difficult for users to discern visual details and perceive colours in the displayed images. This can lead to eyestrain and reduced usability, as users may struggle to perceive a 3D visual scene.

Therefore, in light of the foregoing discussion, there exists a need to overcome the aforementioned problems.

### SUMMARY

The present disclosure seeks to provide a system and a method for facilitating high-quality autostereoscopy and multiscopy, even in bright outdoor lighting conditions and even with a relatively wide field of view (for example, in a range of 20 degrees x 20 degrees to 60 degrees x 25 degrees, or more). The aim of the present disclosure is achieved by a system and a method that employ a collimated backlight with an active optical element that facilitates dynamic beam steering, based on relative locations of users, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1A depicts a first implementation of a system for facilitating multiscopy by employing collimated backlight and dynamic beam steering, in accordance with an embodiment of the present disclosure;
FIGs. 1B and 1C depict a second implementation of the system, in accordance with another embodiment of the present disclosure;
FIG. 1D depicts an additional implementation of the system, in accordance with an embodiment of the present disclosure;
FIG. 1E depicts an exemplary environment in which the system can be employed, in accordance with an embodiment of the present disclosure; and
FIG. 2 depicts steps of a method for facilitating multiscopy by employing collimated backlight and dynamic beam steering, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:
tracking means;
a liquid crystal display (LCD) device comprising a backlight unit that is configured to produce collimated light;
an active optical element arranged on an optical path of the LCD device; and
at least one processor configured to:
   determine a relative location of a head or eyes of at least one user with respect to an image plane of the LCD device, by utilising the tracking means;
   display a plurality of images via the LCD device, to sequentially produce sets of collimated light beams; and
   control the active optical element, based on a relative location of a head or a given eye of an individual one of the at least one user with respect to the image plane of the LCD device, to direct a respective one of the sets of collimated light beams towards the head or the given eye of the individual one of the at least one user.

In a second aspect, an embodiment of the present disclosure provides a method comprising:
determining a relative location of a head or eyes of at least one user with respect to an image plane of a liquid crystal display (LCD) device, by utilising tracking means;
displaying a plurality of images via the LCD device, to sequentially produce sets of collimated light beams, the LCD device comprising a backlight unit configured to produce collimated light; and
controlling an active optical element arranged on an optical path of the LCD device, based on a relative location of a head or a given eye of an individual one of the at least one user with respect to the image plane of the LCD device, to direct a respective one of the sets of collimated light beams towards the head or the given eye of the individual one of the at least one user.

The present disclosure provides the aforementioned system and the aforementioned method that employ the LCD device having the aforesaid backlight unit along with the active optical element, to direct the respective one of the sets of collimated light beams towards the head or the given eye of the individual one of the at least one user, thereby facilitating dynamic beam steering, based on the relative location of the head or the given eye of the individual one of the at least one user. In a case where the system is implemented as a two-dimensional (2D) heads-up display (HUD), the respective one of the sets of collimated light beam is directed towards the head of the individual one of the at least one user. In another case where the system is implemented as a three-dimensional HUD facilitating autostereoscopy and multiscopy, the respective one of the sets of collimated light beam is directed towards the given eye of the individual one of the at least one user. Depending on whether the system is implemented as a 2D HUD or a 3D HUD, the display of the plurality of images is synchronised with the dynamic beam steering, to direct respective ones of the sets of collimated light beams to respective heads or eyes of multiple users (or to respective eyes of a single user), as will be described in more detail later. A technical benefit of such a synchronised display and dynamic beam steering is that an entirety of a light output of the LCD device is directed towards a single user at a given time instant. Thus, a given image for a given user is displayed with the entirety of the light output of the LCD device, thereby increasing an overall image brightness of the displayed image. As a result, the system is susceptible to be utilised in various lighting conditions, for example, ranging from bright daylight conditions to dimly-lit night conditions. Notably, the system can be employed to produce legible images even when an outdoor lighting condition is very bright (for example, when the average intensity of ambient light lies in a range of 10000 lux to 25000 lux), and when a field of view of the LCD device is relatively large (for example, in a range of 20 degrees x 20 degrees to 60 degrees x 25 degrees, or even more).

Moreover, as the plurality of images are displayed sequentially, whilst facilitating dynamic beam steering, crosstalk is reduced significantly. This is particularly beneficial in multiscopy. Furthermore, the system and the method allow for facilitating autostereoscopy and multiscopy without a need for any parallax barrier or lenticular array (as in the prior art). This makes a setup of the system simpler, yet more effective in terms of brightness as well as accuracy, as compared to conventional HUDs. Pursuant to embodiments, even though a frame rate per user would be lower as compared to a native frame rate of the LCD device, a given image is displayed for a given user at a maximum resolution (namely, a resolution per eye or per user would be significantly higher), as compared to the conventional HUDs. As a result, an overall viewing experience of each user would still be considerably more realistic and immersive, as compared to the conventional HUDs.

It will be appreciated that the aforementioned technical benefits can be achieved even when the at least one user is relatively far away (for example, more than 1 metre away) from the system, namely when a distance between the at least one user and the LCD device (along an optical path of the LCD device) is more than 1 metre. By dynamically controlling the active optical element (based on the relative location of the head or the eyes of the at least one user), the respective ones of the sets of collimated light beams are directed in a manner that the at least one user perceives an autostereoscopic effect highly realistically and accurately when viewing images being presented to the eyes of the at least one user. This allows for producing the autostereoscopic effect even when the eyes of the at least one user are located relatively far away (for example, more than 1 metre away) from the LCD device, such that an angle formed between gaze vectors of the eyes (when viewing at a same point on a surface of a virtual object) is relatively small (for example, in a range of 2 to 5 degrees, or even smaller). These technical benefits arise from a fact that the respective ones of the sets of collimated light beams are directed accurately towards respective eyes of the at least one user. This is made possible because there is no conventional multiscopic optical element (for example, such as a parallax barrier or a lenticular array) to place any kind of physical barrier or limitation on the optical path of the collimated light beams. Thus, the active optical element allows for freely steering the collimated light beams even at drastic angles, thereby facilitating a wider range of viewing positions of the eyes of the at least one user, even when the at least one user is far away from the LCD device.

For illustration purposes, there will now be described how various components of the aforementioned system can be implemented. In some implementations, the at least one user is a single user. In other implementations, the at least one user is a plurality of users. It will be appreciated that various steps of the method have been described with respect to an individual one of the at least one user. This means that these steps can be performed similarly for each individual one of the at least one user.

Throughout the present disclosure, the term *"tracking means"* refers to specialised equipment for detecting and/or following a location of a head or eyes of a given user. The given user encompasses each individual one of the at least one user. Optionally, the tracking means is implemented as at least one tracking camera. The at least one tracking camera may comprise at least one of: at least one visible-light camera, at least one infrared (IR) camera, at least one depth camera. Examples of a given visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of a given depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera, and the at least one depth camera) may be utilised in the tracking means. When different types of images captured by the various different types of tracking cameras are utilised, a location of user's head or eyes can be determined highly accurately, as results obtained from one type of image can be used to refine results obtained from another type of image. Herein, these different types of images constitute tracking data collected by the tracking means, and may be in the form of at least one of: visible-light images, IR images, depth images.

It will be appreciated that the at least one tracking camera is arranged to face the given user, to facilitate tracking of the location of the head or the eyes of the given user. A relative location of the at least one tracking camera with respect to the image plane (namely, an imaginary plane on which virtual images are to be presented to the at least one user) of the LCD device is pre-known. This enables to determine the relative location of the head or the eyes of the given user with respect to the image plane. Optionally, in this regard, when the tracking means are utilised to detect and/or follow the location of the head or the eyes of the given user, a location of the head or the eyes of the given user with respect to the at least one tracking camera is accurately known. Thus, the relative location of the head or the eyes of the given user with respect to the image plane can be determined, based on the relative location of the at least one tracking camera with respect to the image plane, and the location of the head or the eyes of the given user with respect to the at least one tracking camera. Such a determination may utilise a coordinate geometry-based technique and/or a trigonometry-based technique. It will be appreciated that in autostereoscopic and multiscopic implementations of the system, the tracking means tracks both eyes of the given user with a significantly high accuracy and precision, such that an error in determining the relative location may, for example, be minimised to within a tolerance range of approximately (+/-) 8 millimetres.

Pursuant to embodiments of the present disclosure, the backlight unit is configured to produce collimated light. Throughout the present disclosure, the term "collimated light beams" encompasses fully-collimated light beams as well as near-collimated light beams. By "near-collimated light beams", it means that an angle formed by such light beams with respect to a predefined direction of collimation is less than a predefined angle. This predefined angle may, for example, lie within a range of 10 degrees to 30 degrees.

It will be appreciated that the backlight unit can be configured to produce collimated light in various ways that are well-known in the art. For brevity, some of the various ways will now be described only briefly, without limiting the backlight to such implementations only. In a first example implementation, the backlight unit could comprise a plurality of laser light sources and a light guide, wherein the plurality of laser light sources are arranged at one or more edges of the light guide; light beams emitted by the plurality of laser light sources enter the light guide, which then re-directs the light beams to form a set of collimated light beams (namely, a collimated output). In a second example implementation, the backlight unit could comprise a light guide panel (LGP) with integrated microstructures (for example, such as prisms or lenses) and light-emitting diodes (LEDs) arranged at one or more edges of the LGP; light beams emitted by the LEDs enter the LGP, wherein the microstructures redirect the light beams to form a set of collimated light beams (namely, a collimated output). In a third example implementation, the backlight unit could comprise an array of LEDs and an array of collimating lenses arranged on an optical path of the array of LEDs, wherein the collimating lenses are employed to collimate light beams emitted by the LEDs, thereby producing a set of collimated light beams (namely, a collimated output).

Apart from the backlight unit, the LCD device further comprises:
a liquid crystal (LC) layer comprising a plurality of LC cells;
a linear polarizer arranged on an optical path of the LC layer; and
a drive circuit employed to individually control the plurality of LC cells of the LC layer.

The LC layer is encased between a first substrate and a second substrate. At least one first electrode is deposited on the first substrate and disposed between the LC layer and the first substrate, while a plurality of second electrodes are deposited on the second substrate and disposed between the LC layer and the second substrate. The drive circuit comprises electronic circuit components for controlling respective ones of the plurality of LC cells. These electronic circuit components could be implemented as at least one of: thin-film transistor (TFT) switches, metal-oxide-semiconductor field-effect transistor (MOSFET) switches, programmable resistors, programmable inductors, programmable capacitors. The electronic circuit components are electrically connected to respective ones of the plurality of second electrodes. Each LC cell has a respective electronic circuit component that controls a voltage applied to a respective one of the plurality of second electrodes. The at least one first substrate could be electrically connected to an electrical ground or a common electrical plane.

In some implementations, the backlight unit is configured to emit collimated light beams having a polarization orientation that is different from a polarization orientation of the linear polarizer. As an example, when the backlight unit is implemented using laser light sources, light beams emitted by the laser light sources are typically already polarized. One example of such laser light sources is semiconductor Lasers (for example, such as laser diodes). In such an example, the laser light sources can be configured to emit the collimated light beams having said polarization orientation. Various ways to perform such configuring are well-known in the art.

In other implementations, the LCD device further comprises another linear polarizer having another polarization orientation that is different from a polarization orientation of the linear polarizer, and wherein the LC layer is arranged between the linear polarizer and the another linear polarizer. In such implementations, various components of the LCD device may be arranged as follows:
Backlight unit -> another linear polarizer -> LC layer -> linear polarizer Moreover, for practical implementations of the system and the method, the LCD device could further comprise a colour filter array (CFA) that is arranged on the optical path of the backlight unit. In such implementations, the LC cells of the LC layer correspond to sub-pixels of a plurality of pixels. The CFA can be arranged anywhere on the optical path. Optionally, the CFA is arranged adjacent to the LC layer, between the LC layer and the linear polarizer. By "adjacent", it is meant that there is a negligible gap between the CFA and the LC layer. A technical benefit of such an arrangement of the CFA is that there is no subpixel light leakage in the LCD device. This eliminates crosstalk (between sub-pixels and pixels), thereby eliminating any ghosting artefacts. However, it will be appreciated that the CFA is not necessary; in a case where there is no CFA in the LCD device, the sets of collimated light beams are produced in monochrome.

Throughout the present disclosure, the term *"active optical element"* refers to an optical element that is controllable (based on a relative location of a head or a given eye of a given user) for actively directing (namely, steering) a respective set of collimated light beams towards the head or the given eye of the given user. In some implementations, the active optical element could be implemented as a separate element from the LCD device. In other implementations, the active optical element could be implemented in a form of a layer in the LCD device.

Optionally, the active optical element is implemented as a liquid-crystal (LC) optical element. The LC optical element enables in directing light beams passing therethrough by adjusting a refractive index of an LC material in the LC optical element. In this regard, the refractive index of the LC material can be controlled electrically. Optionally, the LC optical element is implemented as at least one LC layer (encased between substrates). In some implementations, the LC optical element could be implemented as two LC layers. In an example, the LC optical element may be implemented as a switchable LC shutter array. Electrically controlling the LC material to redirect light beams incident thereupon is well-known in the art. A technical benefit of implementing the LC optical element is that the LC material in the LC optical element could be easily and conveniently controlled (electrically) to direct the light beams very precisely, irrespective of any relative location of the eyes of the at least one user.

Alternatively, optionally, the active optical element is implemented using meta elements. As an example, the meta elements can be in a form of phase-change materials (for example, such as chalcogenides) that can be electrically controlled to switch between different optical states, allowing for active control of a phase shift and a bending angle of the light beams. A technical benefit of implementing using the meta elements is that the light beams can be bent to re-direct the light beams in any specific direction.

The at least one processor controls an overall operation of the system. The at least one processor is communicably coupled to the tracking means, the LCD device and the active optical element (specifically, to a drive circuit of the active optical element). Optionally, the at least one processor is implemented as a processor of the LCD device. Alternatively, optionally, the at least one processor is implemented as a processor of a computing device that is communicably coupled to the LCD device. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

As mentioned earlier, in some implementations, the system can be implemented as a 2D HUD. In such implementations, the display of the plurality of images is synchronised with the dynamic beam steering, to direct respective ones of the sets of collimated light beams towards a head of a single user (when the at least one user is the single user), or towards respective heads of a plurality of users (when the at least one user is the plurality of users). By "directing towards the head", it is meant that a same 2D image is displayed to both eyes of a given user, thereby presenting a 2D visual scene. When the at least one user is the single user, all of the plurality of images are displayed to the single user. However, when the at least one user is the plurality of users, temporal multiplexing is employed between the plurality of users. Optionally, in this regard, when displaying, the at least one processor is configured to display a same image for each of the plurality of users, to produce different sets of collimated light beams for respective ones of the plurality of users, wherein when controlling, the at least one processor is configured to control the active optical element, based on a relative location of a head of each of the plurality of users with respect to the image plane of the LCD device, to direct a respective one of the different sets of collimated light beams towards the head of each of the plurality of users, by employing temporal multiplexing. This allows to present the 2D visual scene to the plurality of users, whilst increasing an overall image brightness of the 2D visual scene, as the entirety of the light output of the LCD device is directed towards only one of the plurality of users at a given time instant. It will be appreciated that this same image is displayed during a given time period only, namely until the same image has been displayed to each of the plurality of users; thereafter, a next same image is displayed to each of the plurality of users. It will also be appreciated that the same image may be either displayed repeatedly to produce respective ones of the different sets of collimated light beams, or displayed continuously to produce the different sets of collimated light beams.

In other implementations, the system can be implemented as a 3D HUD. In such implementations, the display of the plurality of images is synchronised with the dynamic beam steering, to direct respective ones of the sets of collimated light beams towards respective eyes of a single user (when the at least one user is the single user), or towards respective eyes of a plurality of users (when the at least one user is the plurality of users). In such an implementation, different 2D images are displayed to different eyes of a given user, thereby presenting a 3D visual scene. It will be appreciated that the plurality of images are regular 2D images that present virtual images of at least one virtual object. In other words, these images are not light field images having different vertical stripes of pixels for different eyes of users as in conventional light field images that need to be displayed using a multiscopic optical element (such as a parallax barrier or a lenticular array). Notably, the different 2D images are displayed to respective ones of the different eyes of the given user, thereby presenting the 3D visual scene. Irrespective of whether the at least one user is the single user or the plurality of users, temporal multiplexing is employed. Optionally, in this regard, when displaying, the at least one processor is configured to display different images for the given eye and another eye of the individual one of the at least one user, to produce different sets of collimated light beams for the given eye and the another eye, wherein when controlling, the at least one processor is configured to control the active optical element, based on the relative location of the given eye and a relative location of the another eye with respect to the image plane of the LCD device, to direct respective ones of the different sets of collimated light beams towards the given eye and the another eye, by employing temporal multiplexing. These steps can be performed similarly for each individual one of the at least one user. This allows for facilitating autostereoscopy and multiscopy, whilst increasing an overall image brightness of the 3D visual scene, as the entirety of the light output of the LCD device is directed towards only one of the eyes of the individual one of the plurality of users at a given time instant. As different images for respective ones of different eyes of different users are displayed at different time instants, crosstalk is significantly reduced, thereby eliminating any ghosting artefacts. In other words, a given image is displayed to produce a given set of collimated light beams that is directed towards a given eye of a given user only.

It will be appreciated that in a case where the at least one user is the plurality of users, the different images for the given eye and the another eye of the individual one of the at least one user may or may not be displayed sequentially. For illustration purposes only, there will now be considered an example case where there are two users A and B. In such a case, the plurality of images can be displayed as follows:
One_image_A, Another_image_A, One_image_B, Another_image_B, ... or
One_image_A, One_image_B, Another_image_A, Another_image_B, ... or
One_image_B, One_image_A, Another_image_B, Another_image_A, ... wherein
"One_image_A" represents an image for one of the eyes of the user A,
"Another_image_A" represents another image for another of the eyes of the user A,
"One_image_B" represents an image for one of the eyes of the user B, and
"Another_image_B" represents another image for another of the eyes of the user B.

Moreover, optionally, in order to facilitate autostereoscopy, the different images for the given eye and the another eye of the individual one of the at least one user are generated, based on the relative location of the given eye and the another eye of the individual one of the at least one user with respect to the image plane of the LCD device, respectively. This allows the different images to present different virtual images to the given eye and the another eye, thereby presenting the 3D visual scene.

In some implementations, the at least one processor is configured to generate the different images from a perspective of the relative location of the given eye and the another eye of the individual one of the at least one user with respect to the image plane, by employing a 3D model of a virtual environment comprising the at least one virtual object. The term "virtual object" refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and a virtual information. The term "three-dimensional model" of the virtual environment refers to a data structure that comprises comprehensive information pertaining to the at least one virtual object. Such a comprehensive information is indicative of at least one of: a plurality of features of the at least one virtual object or its portions, a shape and a size of the at least one virtual object or its portions, a pose of the at least one virtual object or its portions, a material of the at least one virtual object or its portions, a colour and an optical depth of the at least one virtual object or its portions. The 3D model may be generated in the form of a 3D polygonal mesh, a 3D point cloud, a 3D surface cloud, a voxel-based model, or similar. Optionally, the at least one processor is configured to store the 3D model at a data repository that is communicably coupled to the at least one processor. The data repository may be implemented as a memory of the at least one processor, a cloud-based database, or similar. In other implementations, the at least one processor is configured to obtain the different images to be presented to the given eye and the another eye of the individual one of the at least one user in a form of 2D user interface (UI) elements. The 2D UI elements could pertain to, for example, a virtual navigation tool, a virtual gadget, a virtual message, a virtual entity, a virtual entertainment media, a virtual information, or similar.

Furthermore, optionally, when controlling the active optical element, the at least one processor is configured to:
determine a viewing direction for each portion of the respective one of the sets of collimated light beams with respect to a location of the head or the given eye of the individual one of the at least one user, based on the relative location of the head or the given eye of the individual one of the at least one user with respect to the image plane of the LCD device; and
control a corresponding portion of the active optical element that lies on an optical path of said portion of the respective one of the sets of collimated light beams, to direct said portion of the respective one of the sets of collimated light beams along the viewing direction.

This allows for directing different portions of the respective one of the sets of collimated light beams depending on respective locations of pixels in the LCD device from where each of these different portions of the respective one of the set of collimated light beams emanates. In other words, the dynamic beam steering is performed for the different portions of the respective one of the set of collimated light beams at a finer granular level. Notably, an entirety of the LCD device spans a certain field of view with respect to the head or the given eye of the individual one of the at least one user. Therefore, for the different portions of the respective one of the sets of collimated light beams, respective viewing directions would be different even for the individual one of the at least one user. By controlling corresponding portions of the active optical element to direct the different portion of the respective one of the sets of collimated light beams along the respective viewing directions, a sharp image of the at least one virtual object can be displayed to each eye of the individual one of the at least one user. This greatly improves a quality of a visual scene being presented to the individual one of the at least one user.

Moreover, optionally, the system further comprises an additional active optical element arranged on the optical path of the LCD device, between the LCD device and the active optical element, wherein the at least one processor is configured to:
determine a three-dimensional (3D) bounding space within which the head of the individual one of the at least one user is likely to be present;
determine a viewing direction for the respective one of the sets of collimated light beams with respect to a location of the 3D bounding space; and
control the additional active optical element to direct the respective one of the sets of collimated light beams along said viewing direction,
wherein when controlling the active optical element, the at least one processor is configured to control the active optical element, based further on said viewing direction along which the respective one of the sets of collimated light beams is being directed by the additional active optical element, to re-direct the respective one of the sets of collimated light beams towards the head or the given eye of the individual one of the at least one user.

These steps can be performed for each user in case of multiple users. It will be appreciated that the 3D bounding space need not necessarily have a fixed shape and/or size. The 3D bounding space merely indicates an approximate location of the head of the individual one of the at least one user.

When the system is implemented inside a vehicle, the 3D bounding space could be determined, for example, based on a current setting of at least one adjustable seat parameter of a seat of the vehicle on which the individual one of the at least one user is sitting. Optionally, the at least one adjustable seat parameter comprises at least one of: a position of the seat, an orientation of a backrest of the seat, a height of a lower part of the seat from a floor of the vehicle, an orientation of the lower part of the seat, a position of a neck support of the seat, an orientation of the neck support, a curvature of a lumbar support of the seat. It will be appreciated that the at least one adjustable seat parameter is approximately indicative of a current position of the head of the individual one of the at least one user inside the vehicle, and thus, could be beneficially utilised for determining the 3D bounding space. In this regard, the system may further comprise at least one sensor that is employed to detect the current setting of the at least one adjustable seat parameter of the seat. Optionally, the at least one sensor comprises at least one of: an image sensor, a position sensor, an orientation sensor, a height sensor, a pressure sensor. As an example, the position sensor could be employed to detect the position of the seat and the position of the neck support. As another example, the orientation sensor could be employed to detect the orientation of the backrest, the orientation of the neck support, and the orientation of the lower part of the seat. As yet another example, the height sensor could be employed to detect the height of the lower part of the seat from the floor of the vehicle. As still another example, the pressure sensor could be employed to detect the curvature of the lumbar support. Such sensors are well-known in the art.

Once the 3D bounding space is determined, the viewing direction for the respective one of the sets of collimated light beams with respect to the location of the 3D bounding space can be determined. As an example, the location of the 3D bounding space could be considered as a location of a centre of mass of the 3D bounding space.

A technical effect of first directing the respective one of the sets of collimated light beams along said viewing direction (using the additional active optical element) is that the active optical element does not has to perform all the bending on its own. This allows for a very precise control and re-directing of the collimated light beams towards the individual one of the at least one user. Notably, in a case where a given user is located obliquely with respect to the image plane of the LCD device, the system is still capable of directing a respective set of collimated light beams towards the given user, even with a relatively narrower light bending range for the active optical element.

Furthermore, optionally, when the at least one user is a plurality of users, the at least one processor is configured to:
detect when eyes of at least one of the plurality of users are closed or the at least one of the plurality of users is not looking towards the image plane of the LCD device; and
when it is detected that the eyes of the at least one of the plurality of users are closed or the at least one of the plurality of users is not looking towards the image plane, perform at least one of:
   skip displaying those images out of the plurality of images that correspond to the at least one of the plurality of users;
   skip controlling the active optical element, based on a relative location of a head or the eyes of the at least one of the plurality of users with respect to the image plane of the LCD device;
   increase a frame rate at which images are to be displayed to a remainder of the plurality of users;
   increase a resolution of the images to be displayed to the remainder of the plurality of users, by employing temporal multiplexing.

Optionally, the tracking means is utilised to detect when the eyes of the at least one of the plurality of users are closed, or when the at least one of the plurality of users is not looking towards the image plane of the LCD device. In this regard, the tracking data collected by the tracking means comprises a plurality of images of a given eye of a given user. The at least one processor is configured to: extract a plurality of features of the given eye from a given image; and identify at least one of: a pupil of the given eye, a curvature of an eyelid of the given eye, a position of an eyelash of the given eye, a shape of the given eye, a size of the given eye, based on the plurality of features. This allows to detect when the given eye of the given user is closed. This also allows to determine a gaze direction of the given eye, which, in turn, allows to detect when the given user is not looking towards the image plane of the LCD device. Such eye-tracking is well-known in the art.

When it is detected that the eyes of the at least one of the plurality of users are closed, or the at least one of the plurality of users is not looking towards the image plane, it means that the at least one of the plurality of users is not viewing the at least one virtual object being presented. Therefore, the displaying of those images out of the plurality of images that correspond to the at least one of the plurality of users can be skipped entirely. Additionally, the controlling of the active optical element, based on the relative location of the head or the eyes of the at least one of the plurality of users with respect to the image plane of the LCD device can also be skipped. Advantageously, skipping the displaying of said images and the controlling of the active optical element potentially facilitates in saving processing resources and processing time of the at least one processor.

As the synchronised display of images and dynamic beam steering is performed by employing temporal multiplexing, skipping of displaying images and controlling the active optical element for the at least one of the plurality of users means that time slots that were previously allotted for the skipped display and the skipped controlling can be utilised for the remainder of the plurality of users. Thus, the frame rate at which the images are to be displayed to the remainder of the plurality of users can be increased.

Alternatively or additionally, the resolution of the images to be displayed to the remainder of the plurality of users can be increased, by employing additional temporal multiplexing. As an example, a given image for a given user (from amongst the remainder of the plurality of users) can be divided into sub-images, wherein these sub-images can be displayed sequentially, whilst controlling the active optical element to direct respective sets of collimated light beams towards the given user. This allows for significantly increasing the resolution of the given image perceived by the given user.

Moreover, optionally, the system further comprises an optical combiner arranged on an optical path of the LCD device and on an optical path of a real-world light field of a real-world environment. The optical combiner is employed to reflect the respective one of the sets of collimated light beams towards the head or the given eye of the individual one of the at least one user, whilst optically combining the real-world light field with the respective one of the sets of collimated light beams.

The optical combiner can be implemented as at least a part of a windshield or other windows of the vehicle. By "at least a part", it is meant that the optical combiner can also be implemented as an entirety of the windshield or the other windows. This allows the system to be implemented as an HUD in the vehicle. The optical combiner could be implemented as at least one of: a lens, a mirror, a semi-transparent mirror, a semi-transparent film, a semi-transparent flexible membrane, a prism, a beam splitter, an optical waveguide, a polarizer. Optical combiners are well-known in the art. Optionally, a tilt angle of the optical combiner with respect to the image plane of the LCD device lies in a range of 10 degrees and 75 degrees.

The present disclosure also relates to the method as described above. Various embodiments and variants disclosed above, with respect to the aforementioned first aspect, apply *mutatis mutandis* to the method.

Optionally, the step of controlling the active optical element comprises:
determining a viewing direction for each portion of the respective one of the sets of collimated light beams with respect to a location of the head or the given eye of the individual one of the at least one user, based on the relative location of the head or the given eye of the individual one of the at least one user with respect to the image plane of the LCD device; and
controlling a corresponding portion of the active optical element that lies on an optical path of said portion of the respective one of the sets of collimated light beams, to direct said portion of the respective one of the sets of collimated light beams along the viewing direction.

Moreover, optionally, when the at least one user is a plurality of users, the step of displaying comprises displaying a same image for each of the plurality of users, to produce different sets of collimated light beams for respective ones of the plurality of users, wherein the step of controlling comprises controlling the active optical element, based on a relative location of a head of each of the plurality of users with respect to the image plane of the LCD device, to direct a respective one of the different sets of collimated light beams towards the head of each of the plurality of users, by employing temporal multiplexing.

Furthermore, optionally, the step of displaying comprises displaying different images for the given eye and another eye of the individual one of the at least one user, to produce different sets of collimated light beams for the given eye and the another eye, wherein the step of controlling comprises controlling the active optical element, based on the relative location of the given eye and a relative location of the another eye with respect to the image plane of the LCD device, to direct respective ones of the different sets of collimated light beams towards the given eye and the another eye, by employing temporal multiplexing.

Moreover, optionally, the method further comprises:
determining a three-dimensional (3D) bounding space within which the head of the individual one of the at least one user is likely to be present;
determining a viewing direction for the respective one of the sets of collimated light beams with respect to a location of the 3D bounding space; and
controlling an additional active optical element to direct the respective one of the sets of collimated light beams along said viewing direction, wherein the additional active optical element is arranged on the optical path of the LCD device, between the LCD device and the active optical element,
wherein the step of controlling the active optical element is performed based further on said viewing direction along which the respective one of the sets of collimated light beams is being directed by the additional active optical element, to re-direct the respective one of the sets of collimated light beams towards the head or the given eye of the individual one of the at least one user.

Furthermore, when the at least one user is a plurality of users, the method further comprises:
detecting when eyes of at least one of the plurality of users are closed or the at least one of the plurality of users is not looking towards the image plane of the LCD device; and
when it is detected that the eyes of the at least one of the plurality of users are closed or the at least one of the plurality of users is not looking towards the image plane, performing at least one of:
   skipping the step of displaying those images out of the plurality of images that correspond to the at least one of the plurality of users;
   skipping the step of controlling the active optical element, based on a relative location of a head or the eyes of the at least one of the plurality of users with respect to the image plane of the LCD device;
   increasing a frame rate at which images are to be displayed to a remainder of the plurality of users;
   increasing a resolution of the images to be displayed to the remainder of the plurality of users, by employing temporal multiplexing.

Moreover, optionally, the method further comprises employing an optical combiner, arranged on an optical path of the LCD device and on an optical path of a real-world light field of a real-world environment, to reflect the respective one of the sets of collimated light beams towards the head or the given eye of the individual one of the at least one user, whilst optically combining the real-world light field with the respective one of the sets of collimated light beams.

### DETAILED DESCRIPTION OF THE DRAWINGS

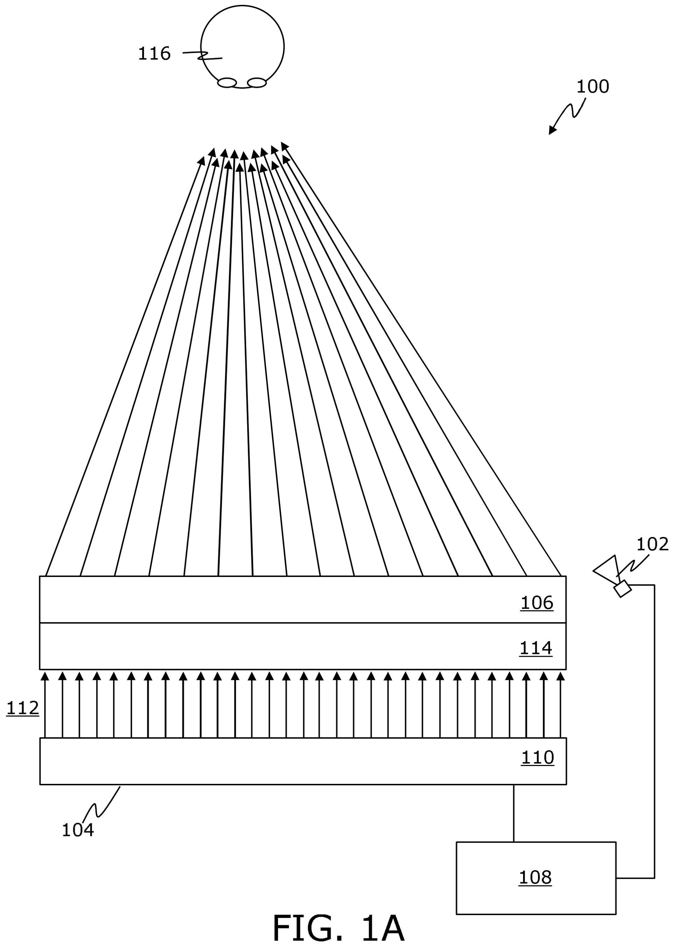

Referring to FIG. 1A, illustrated is a first implementation of a system **100** for facilitating multiscopy by employing collimated backlight and dynamic beam steering, in accordance with an embodiment of the present disclosure. The system **100** comprises tracking means **102,** an LCD device **104,** an active optical element **106** and at least one processor (depicted as a processor **108).** The LCD device **104** comprises a backlight unit **110** that is configured to produce collimated light **112.** The LCD device **104** further comprises an LC layer **114,** a linear polarizer (not shown) arranged on an optical path of the LC layer **114,** and a drive circuit (not shown) employed to individually control a plurality of LC cells of the LC layer **114.** The active optical element **106** is arranged on an optical path of the LCD device **104.**

The processor **108** is configured to:
determine a relative location of a head **116** of at least one user with respect to an image plane of the LCD device **104,** by utilising the tracking means **102;**
display a plurality of images via the LCD device **104,** to sequentially produce sets of collimated light beams; and
control the active optical element **106,** based on a relative location of a head **116** of an individual one of the at least one user with respect to the image plane of the LCD device **104,** to direct a respective one of the sets of collimated light beams towards the head **116** of the individual one of the at least one user.

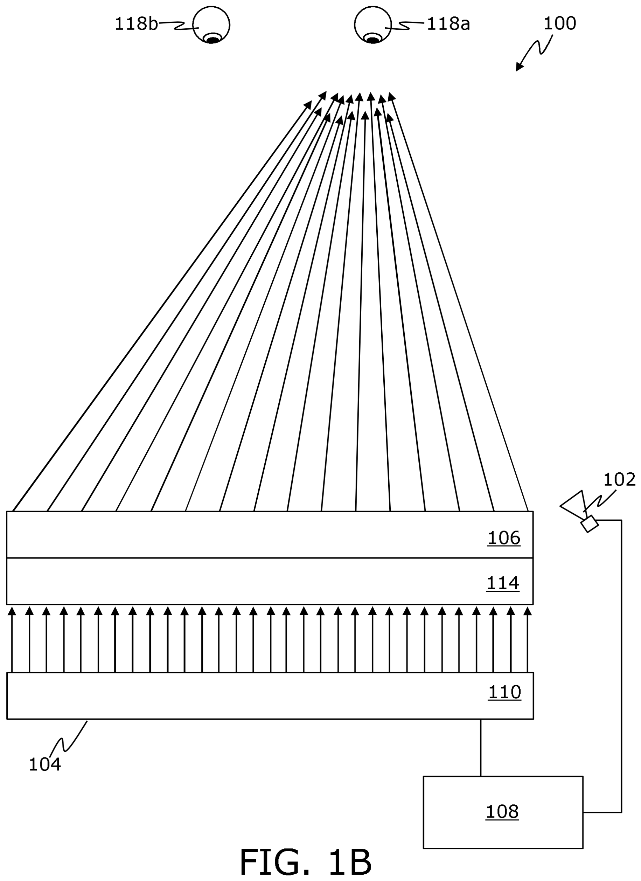

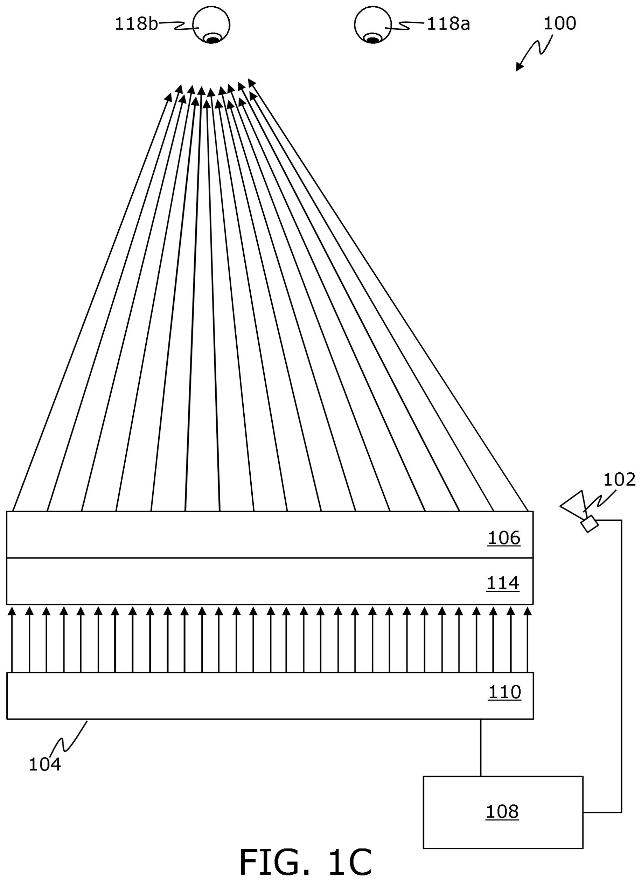

Referring to FIGs. 1B and 1C, illustrated is a second implementation of the system **100,** in accordance with another embodiment of the present disclosure. In the second implementation, the processor **108** is configured to:
determine a relative location of eyes **118a-118b** of at least one user with respect to the image plane of the LCD device **104,** by utilising the tracking means **102;**
display a plurality of images via the LCD device **104,** to sequentially produce sets of collimated light beams; and
control the active optical element **106,** based on a relative location of a given eye **118a** of an individual one of the at least one user with respect to the image plane of the LCD device **104,** to direct a respective one of the sets of collimated light beams towards the given eye **118a** of the individual one of the at least one user.

Optionally, when displaying, the processor **108** is configured to display different images for the given eye **118a** and another eye **118b** of the individual one of the at least one user, to produce different sets of collimated light beams for the given eye **118a** and the another eye **118b,** wherein when controlling, the processor **108** is configured to control the active optical element **106,** based on the relative location of the given eye **118a** and a relative location of the another eye **118b** with respect to the image plane of the LCD device **104,** to direct respective ones of the different sets of collimated light beams towards the given eye **118a** and the another eye **118b,** by employing temporal multiplexing.

It may be understood by a person skilled in the art that FIG. 1A and FIGs. 1B-1C merely depict two example implementations (out of many possible implementations) of the system **100,** for sake of clarity, which should not unduly limit the scope of the claims herein. It is to be understood that the specific implementation of the system **100** is not to be construed as limiting it to specific numbers or types of tracking means, LCD devices, active optical elements, processors. The person skilled in the art will recognize many variations, alternatives, and modifications of embodiments of the present disclosure.

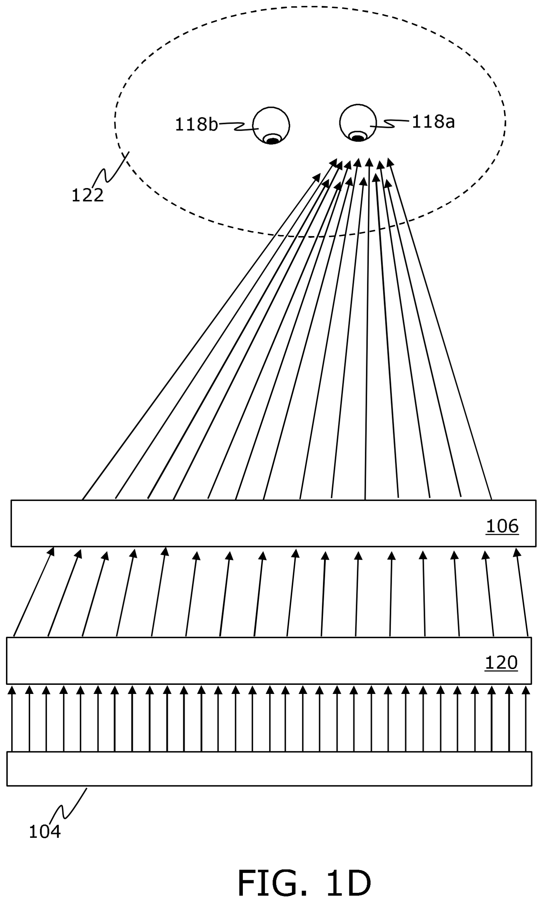

FIG. 1D depicts an additional implementation of the system **100,** in accordance with an embodiment of the present disclosure. In this additional implementation, the system **100** further comprises an additional active optical element **120** arranged on the optical path of the LCD device **104,** between the LCD device **104** and the active optical element **106.** The processor **108** is configured to:
determine a 3D bounding space **122** within which a head of an individual one of the at least one user is likely to be present;
determine a viewing direction for a respective one of the sets of collimated light beams with respect to a location of the 3D bounding space **122;** and
control the additional active optical element **120** to direct the respective one of the sets of collimated light beams along said viewing direction,
wherein when controlling the active optical element **106,** the processor **108** is configured to control the active optical element **106,** based further on said viewing direction along which the respective one of the sets of collimated light beams is being directed by the additional active optical element **120,** to re-direct the respective one of the sets of collimated light beams towards the head or the given eye **118a** of the individual one of the at least one user.

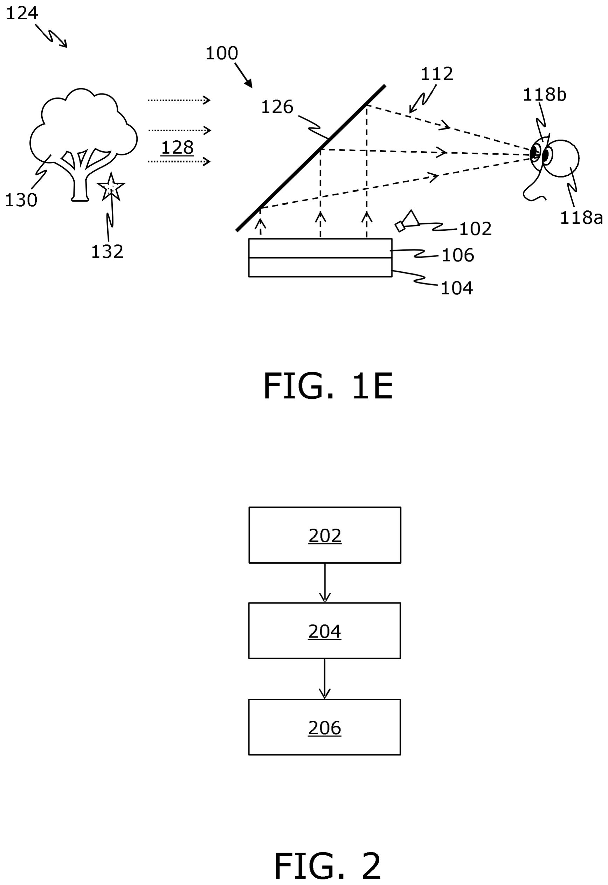

Referring to FIG. 1E, illustrated is an exemplary environment in which the system **100** can be employed, in accordance with an embodiment of the present disclosure. The system **100** is shown to be employed in a real-world environment **124.** The system **100** further comprises an optical combiner **126.** The optical combiner **126** is shown to be arranged on an optical path of the LCD device **104** and on an optical path of a real-world light field **128** of the real-world environment **124.** In the real-world environment **124,** there are one or more real-world objects, depicted as a real-world object **130** (shown as a tree, for illustration purposes only).

The optical combiner **126** is employed to reflect the respective one of the sets of collimated light beams **112** towards the given eye **118a** of the individual one of the at least one user, whilst optically combining the real-world light field **128** with the respective one of the sets of collimated light beams **112.** The respective one of the sets of collimated light beams **112** present at least one virtual object, depicted as a virtual object **132** (shown as a star, for illustration purposes only).

FIGs. 1A-1E are merely examples, which should not unduly limit the scope of the claims herein. A person skilled in the art will recognize many variations, alternatives, and modifications of embodiments of the present disclosure.

Referring to FIG. 2, illustrated are steps of a method for facilitating multiscopy by employing collimated backlight and dynamic beam steering, in accordance with an embodiment of the present disclosure. At step **202,** a relative location of a head or eyes of at least one user with respect to an image plane of an LCD device is determined, by utilising tracking means. At step **204,** a plurality of images are displayed via the LCD device, to sequentially produce sets of collimated light beams. The LCD device comprises a backlight unit configured to produce collimated light. At step **206,** an active optical element arranged on an optical path of the LCD device is controlled, based on a relative location of a head or a given eye of an individual one of the at least one user with respect to the image plane of the LCD device, to direct a respective one of the sets of collimated light beams towards the head or the given eye of the individual one of the at least one user. Steps **204** and **206** are performed simultaneously.

The aforementioned steps are only illustrative and other alternatives can also be provided where one or more steps are added, one or more steps are removed, or one or more steps are provided in a different sequence without departing from the scope of the claims herein.

## Claims

1. A system (100) comprising:
tracking means (102);
a liquid crystal display (LCD) device (104) comprising a backlight unit (110) that is configured to produce collimated light (112);
an active optical element (106) arranged on an optical path of the LCD device; and
at least one processor (108) configured to:
determine a relative location of a head (116) or eyes (118a-118b) of at least one user with respect to an image plane of the LCD device, by utilising the tracking means;
display a plurality of images via the LCD device, to sequentially produce sets of collimated light beams; and
control the active optical element, based on a relative location of a head or a given eye (118a) of an individual one of the at least one user with respect to the image plane of the LCD device, to direct a respective one of the sets of collimated light beams towards the head or the given eye of the individual one of the at least one user.

2. The system (100) of claim 1, wherein when controlling the active optical element (106), the at least one processor (108) is configured to:
determine a viewing direction for each portion of the respective one of the sets of collimated light beams with respect to a location of the head (116) or the given eye (118a) of the individual one of the at least one user, based on the relative location of the head or the given eye of the individual one of the at least one user with respect to the image plane of the LCD device (104); and
control a corresponding portion of the active optical element that lies on an optical path of said portion of the respective one of the sets of collimated light beams, to direct said portion of the respective one of the sets of collimated light beams along the viewing direction.

3. The system (100) of any of the preceding claims, wherein when displaying, the at least one processor (108) is configured to display different images for the given eye (118a) and another eye (118b) of the individual one of the at least one user, to produce different sets of collimated light beams for the given eye and the another eye,
wherein when controlling, the at least one processor is configured to control the active optical element (106), based on the relative location of the given eye and a relative location of the another eye with respect to the image plane of the LCD device (104), to direct respective ones of the different sets of collimated light beams towards the given eye and the another eye, by employing temporal multiplexing.

4. The system (100) of any of the preceding claims, wherein the at least one user is a plurality of users, and wherein when displaying, the at least one processor (108) is configured to display a same image for each of the plurality of users, to produce different sets of collimated light beams for respective ones of the plurality of users,
wherein when controlling, the at least one processor is configured to control the active optical element (106), based on a relative location of a head (116) of each of the plurality of users with respect to the image plane of the LCD device (104), to direct a respective one of the different sets of collimated light beams towards the head of each of the plurality of users, by employing temporal multiplexing.

5. The system (100) of any of the preceding claims, further comprising an additional active optical element (120) arranged on the optical path of the LCD device (104), between the LCD device and the active optical element (106), wherein the at least one processor (108) is configured to:
determine a three-dimensional (3D) bounding space within which the head (116) of the individual one of the at least one user is likely to be present;
determine a viewing direction for the respective one of the sets of collimated light beams with respect to a location of the 3D bounding space (122); and
control the additional active optical element to direct the respective one of the sets of collimated light beams along said viewing direction, wherein when controlling the active optical element, the at least one processor is configured to control the active optical element, based further on said viewing direction along which the respective one of the sets of collimated light beams is being directed by the additional active optical element, to re-direct the respective one of the sets of collimated light beams towards the head or the given eye (118a) of the individual one of the at least one user.

6. The system (100) of any of the preceding claims, further comprising an optical combiner (126) arranged on an optical path of the LCD device (104) and on an optical path of a real-world light field (128) of a real-world environment (124), wherein the optical combiner is employed to reflect the respective one of the sets of collimated light beams towards the head (116) or the given eye (118a) of the individual one of the at least one user, whilst optically combining the real-world light field with the respective one of the sets of collimated light beams.

7. The system (100) of any of the preceding claims, wherein the at least one user is a plurality of users, wherein the at least one processor (108) is configured to:
detect when eyes (118a-118b) of at least one of the plurality of users are closed or the at least one of the plurality of users is not looking towards the image plane of the LCD device (104); and
when it is detected that the eyes of the at least one of the plurality of users are closed or the at least one of the plurality of users is not looking towards the image plane, perform at least one of:
skip displaying those images out of the plurality of images that correspond to the at least one of the plurality of users;
skip controlling the active optical element (106), based on a relative location of a head (116) or the eyes of the at least one of the plurality of users with respect to the image plane of the LCD device;
increase a frame rate at which images are to be displayed to a remainder of the plurality of users;
increase a resolution of the images to be displayed to the remainder of the plurality of users, by employing temporal multiplexing.

8. A method comprising:
determining a relative location of a head (116) or eyes (118a-118b) of at least one user with respect to an image plane of a liquid crystal display (LCD) device (104), by utilising tracking means (102);
displaying a plurality of images via the LCD device, to sequentially produce sets of collimated light beams, the LCD device comprising a backlight unit (110) configured to produce collimated light (112); and
controlling an active optical element (106) arranged on an optical path of the LCD device, based on a relative location of a head or a given eye (118a) of an individual one of the at least one user with respect to the image plane of the LCD device, to direct a respective one of the sets of collimated light beams towards the head or the given eye of the individual one of the at least one user.

9. The method of claim 8, wherein the step of controlling the active optical element (106) comprises:
determining a viewing direction for each portion of the respective one of the sets of collimated light beams with respect to a location of the head (116) or the given eye (118a) of the individual one of the at least one user, based on the relative location of the head or the given eye of the individual one of the at least one user with respect to the image plane of the LCD device (104); and
controlling a corresponding portion of the active optical element that lies on an optical path of said portion of the respective one of the sets of collimated light beams, to direct said portion of the respective one of the sets of collimated light beams along the viewing direction.

10. The method of any of claims 8-9, wherein the step of displaying comprises displaying different images for the given eye (118a) and another eye (118b) of the individual one of the at least one user, to produce different sets of collimated light beams for the given eye and the another eye,
wherein the step of controlling comprises controlling the active optical element (106), based on the relative location of the given eye and a relative location of the another eye with respect to the image plane of the LCD device (104), to direct respective ones of the different sets of collimated light beams towards the given eye and the another eye, by employing temporal multiplexing.

11. The method of any of claims 8-10, wherein the at least one user is a plurality of users, and wherein the step of displaying comprises displaying a same image for each of the plurality of users, to produce different sets of collimated light beams for respective ones of the plurality of users,
wherein the step of controlling comprises controlling the active optical element (106), based on a relative location of a head (116) of each of the plurality of users with respect to the image plane of the LCD device (104), to direct a respective one of the different sets of collimated light beams towards the head of each of the plurality of users, by employing temporal multiplexing.

12. The method of any of claims 8-11, further comprising:
determining a three-dimensional (3D) bounding space within which the head (116) of the individual one of the at least one user is likely to be present;
determining a viewing direction for the respective one of the sets of collimated light beams with respect to a location of the 3D bounding space (122); and
controlling an additional active optical element (120) to direct the respective one of the sets of collimated light beams along said viewing direction, wherein the additional active optical element is arranged on the optical path of the LCD device (104), between the LCD device and the active optical element (106),
wherein the step of controlling the active optical element is performed based further on said viewing direction along which the respective one of the sets of collimated light beams is being directed by the additional active optical element, to re-direct the respective one of the sets of collimated light beams towards the head or the given eye (118a) of the individual one of the at least one user.

13. The method of any of claims 8-12, further comprising employing an optical combiner (126), arranged on an optical path of the LCD device (104) and on an optical path of a real-world light field (128) of a real-world environment (124), to reflect the respective one of the sets of collimated light beams towards the head (116) or the given eye (118a) of the individual one of the at least one user, whilst optically combining the real-world light field with the respective one of the sets of collimated light beams.

14. The method of any of claims 8-13, wherein the at least one user is a plurality of users, wherein the method further comprises:
detecting when eyes (118a-118b) of at least one of the plurality of users are closed or the at least one of the plurality of users is not looking towards the image plane of the LCD device (104); and
when it is detected that the eyes of the at least one of the plurality of users are closed or the at least one of the plurality of users is not looking towards the image plane, performing at least one of:
skipping the step of displaying those images out of the plurality of images that correspond to the at least one of the plurality of users;
skipping the step of controlling the active optical element (106), based on a relative location of a head (116) or the eyes of the at least one of the plurality of users with respect to the image plane of the LCD device;
increasing a frame rate at which images are to be displayed to a remainder of the plurality of users;
increasing a resolution of the images to be displayed to the remainder of the plurality of users, by employing temporal multiplexing.
